# EUROPEAN PATENT APPLICATION

(11) **EP 3 530 946 A1**
(43) Date of publication of application: **28.08.2019**
(21) Application number: 19159352.4
(22) Date of filing: 26.02.2019
(51) Int. Cl.: F04C 18/02

(54) **MOTOR-OPERATED COMPRESSOR**

(30) Priority: 26.02.2018 KR 20180023136
(71) Applicant: LG Electronics Inc., Seoul 07336 (KR)
(72) Inventor: PARK, Ilyoung, 08592 Seoul (KR); KIM, Joohyung, 08592 Seoul (KR); KIM, Taekyoung, 08592 Seoul (KR)
(74) Representative: Vossius & Partner Patentanwälte Rechtsanwälte mbB

(57) **Abstract**

An electric compressor includes a first scroll, a second scroll engaged with the first scroll and making an orbiting motion to form a pair of two compression chambers with the first scroll, a rotary shaft eccentrically coupled to the second scroll, a bearing member allowing the rotary shaft to be inserted and rotatably support therein, and a frame fixed to the opposite side of the first scroll in a radial direction with the second scroll interposed therebetween and having a bearing support portion to which the bearing member is inserted and fixed, wherein with respect to a state in which the bearing member is inserted into the frame, an inner diameter of the bearing support portion is formed to be smaller than an outer diameter of the baring member.

## Description

### BACKGROUND OF THE INVENTION

### 1. Field of the Invention

The present disclosure relates to a compressor, and more particularly, to a motor-operated compressor which is mainly applied to vehicles including an electric vehicle.

### 2. Background of the Invention

In general, compressors for compressing a refrigerant in automotive air-conditioning systems have been developed in various forms. Recently, motor-operated compressors (or electric compressors) driven by electricity using a motor have been actively developed as automobile parts tend to become electric/electronic parts.

An electric compressor largely adopts a scroll compression scheme appropriate for a high compression ratio operation, among various compression schemes. The scroll type electric compressor is configured such that a motor part formed as a rotary motor is installed inside a closed casing, a compression part including a fixed scroll and an orbiting scroll is installed on one side of the motor part, and the motor part and the compression part are connected by a rotary shaft so that a rotational force of the motor part is transmitted to the compression part.

The rotational force transmitted to the compression part causes the orbiting scroll to make an orbiting motion with respect to the fixed scroll to form a pair of two compression chambers each including a suction chamber, an intermediate compression chamber and a discharge chamber so that a refrigerant may be sucked into both compression chambers, compressed and simultaneously discharged.

Meanwhile, the compressor applied to an automotive air-conditioning system is installed largely horizontally in terms of an engine room structure of a vehicle. Accordingly, the motor part and the compression part of the compressor are arranged in a transverse direction and connected by the rotary shaft, a support part for rotatably supporting the rotary shaft on both lateral sides based on the motor part is provided. In the case of the scroll compressor, the support part includes a main frame and a sub-frame provided on both sides of the motor part.

The main frame and the sub-frame are provided with a bearing for supporting the rotary shaft in a radial direction. As the bearing, a bush bearing may be used, and generally, a deep recess ball bearing (hereinafter, referred to as a "ball bearing") is applied. The ball bearing may support the rotary shaft in an axial direction, as well as in the radial direction. However, in a compressor in which CO₂ refrigerant is applied to form a discharge pressure of 100 bar or higher, an axial load and a circumferential load are significantly increased as compared with the same compressor to which some other refrigerants (for example, R134a or R410a). Thus, in particular, when the ball bearing is coupled to the main bearing by applying interference of the existing specification, an outer race of the bearing may be easily released while the compressor is being driven. In this case, efficiency of the compressor may be lowered and reliability thereof may be significantly degraded.

In view of this, there is known a technique in which, after inserting the bearing, a kind of caulking operation is performed to press the periphery of the bearing at predetermined intervals to form a burr, and the bearing is supported in an axial direction using the bur. This technique, however, has a problem in that, if the operation is not uniformly performed, the bearing may not be constantly supported and processing cost due to the caulking operation is increased.

In the related art, there is also known a technique of increasing bearing power with respect to a bearing by forming press beads to protrude at predetermined intervals in an axial direction on an inner circumferential surface of a driving shaft insertion hole in which a bearing is press-fit (related art (Korean Utility Model Registration No. 20-0351633, May 17, 2004).

However, as described above, the related art has a problem in that machining cost is increased due to formation of the plurality of press beads on the inner circumferential surface of the driving shaft insertion hole to increase the bearing power with respect to the bearing.

Also, in the prior art, burrs are generated as the ends of the press beads are crushed by the bearing in the process of press-fitting the bearing into the driving shaft insertion hole. This burr is mixed with oil or a refrigerant and flows into the bearing surface, while flowing inside the compressor. As a result, the bearing surface wears down, shortening a service life of the bearing and the compressor including the bearing and reducing reliability of the compressor.

### SUMMARY OF THE INVENTION

Therefore, an aspect of the detailed description is to provide an electric compressor in which a bearing supporting a rotary shaft is not easily detached from a portion where the bearing is engaged.

Another aspect of the present disclosure is to provide an electric compressor in which a bearing supporting a rotary shaft or a portion to which the bearing is engaged is easily machined and the bearing is not easily released.

Another aspect of the present disclosure is to provide an electric compressor in which generation of a foreign material is restrained in the process of coupling a bearing supporting a rotary shaft to prevent the bearing and other components from being damaged due to foreign material and restrain the bearing and the compressor including the bearing from being shortened in a service life.

Another aspect of the present disclosure is to provide an electric compressor in which a bearing is not released during an operation even when a coefficient of thermal expansion of a support part into which the bearing is inserted is higher than that of the bearing, thus increasing durability and reliability of the bearing.

Another aspect of the present disclosure is to provide an electric compressor in which a bearing load is not excessively increased, while an inner diameter of a support part into which a bearing is inserted is formed to be smaller than an outer diameter of the bearing, thus preventing degradation of compressor efficiency.

To achieve these and other advantages and in accordance with the purpose of this specification, as embodied and broadly described herein, in an electric compressor having a discharge pressure of 100 bar or higher, after a bearing member is inserted and coupled to a bearing support portion of a frame and an inner diameter of the bearing support portion after the bearing member is inserted into the bearing support portion of the frame is increased to 0.08 to 0.13% as compared before the bearing member is inserted.

Here, the frame may be formed of aluminum and the bearing member may be formed of steel.

In a state in which the bearing member is press-fit to the bearing support portion, an inner diameter at a corner of the bearing support portion may be formed to be the same along a circumferential direction.

Also, in a state in which the bearing member is press-fit to the bearing support portion, the inner diameter at the corner of the bearing support portion may be formed to be the same as an outer diameter of the bearing member along the circumferential direction.

To achieve these and other advantages and in accordance with the purpose of this specification, as embodied and broadly described herein, an electric compressor includes: a first scroll; a second scroll engaged with the first scroll and making an orbiting motion to form a pair of two compression chambers with the first scroll; a rotary shaft eccentrically coupled to the second scroll; a bearing member allowing the rotary shaft to be inserted and rotatably support therein; and a frame fixed to the opposite side of the first scroll in a radial direction with the second scroll interposed therebetween and having a bearing support portion to which the bearing member is inserted and fixed wherein with respect to a state in which the bearing member is not inserted into the frame yet, an inner diameter of the bearing support portion is formed to be smaller than an outer diameter of the baring member.

An inner diameter of the bearing support portion may be formed to be smaller by 0.08 to 0.13% than the outer diameter of the bearing member.

The frame may be formed of a material having a thermal strain temperature lower than that of the bearing member or the rotary shaft.

The bearing support portion may have a guide surface such that an inner diameter thereof is increased in a direction in which the bearing member is inserted.

An axial length of the guide surface may be 1/2 or less as compared with an axial length of the bearing support portion.

A pressure of a refrigerant discharged from the compression chamber may be 100 bar or greater.

The frame may be formed of aluminum material.

To achieve these and other advantages and in accordance with the purpose of this specification, as embodied and broadly described herein, an electric compressor includes: a first scroll; a second scroll engaged with the first scroll and making an orbiting motion to form a pair of two compression chambers with the first scroll; a rotary shaft eccentrically coupled to the second scroll; a frame fixed to the opposite side of the first scroll in a radial direction with the second scroll interposed therebetween and allowing the rotary shaft to be coupled thereto in a penetrating manner; and a bearing member provided between the frame and the rotary shaft or between the second scroll and the rotary shaft and rotatably supporting the rotary shaft, wherein a bearing support portion into which the bearing member is inserted is formed in the frame, an outer diameter of the bearing member is formed to be greater than an inner diameter of the bearing support portion, and the amount of interference between the bearing member and the bearing support portion defined by a difference between the outer diameter of the bearing member and the inner diameter of the bearing support portion is 0.08 to 0.13% with respect to the inner diameter of the bearing support portion.

Here, a shaft hole through which the rotary shaft penetrates may be formed at the frame, the shaft hole may be formed on one side of the bearing support portion, and a sealing member sealing a gap between an inner circumferential surface of the shaft hole and an outer circumferential surface of the rotary shaft may be provided in the shaft hole.

The sealing member may be formed of a material having a coefficient of thermal expansion as compared with the frame.

The frame may be formed of aluminum and the bearing member may be formed of steel.

In a state in which the bearing member is press-fit to the bearing support portion, an inner diameter at a corner of the bearing support portion may be formed to be the same along a circumferential direction.

Also, in a state in which the bearing member is press-fit to the bearing support portion, the inner diameter at the corner of the bearing support portion may be formed to be the same as an outer diameter of the bearing member along the circumferential direction.

A pressure of a refrigerant discharged from the compression chamber may be 100 bar or greater.

In the electric compressor according to the present disclosure, since the outer diameter of the bearing supporting the rotary shaft is formed to be larger than the inner diameter of the bearing support portion, it is possible to prevent the bearing from being easily released from the bearing support portion. In addition, since an additional process for preventing breakaway of the bearing is not performed, the bearing may be easily coupled.

In addition, since the amount of interference between the outer diameter of the bearing supporting the rotary shaft and the inner diameter of the support portion in which the bearing is inserted and supported is appropriately set, generation of a foreign material during a process of press-fitting the bearing is minimized to suppress shortening of a service life of the bearing and the compressor including the bearing.

Further, according to the present disclosure, since the amount of interference between the bearing and the support portion into which the bearing is inserted is appropriately set, even when the coefficient of thermal rate of the support portion into which the bearing is inserted is higher than that of the bearing, the bearing is restrained from being released during an operation, thus increasing durability and reliability of the bearing.

In addition, according to the present disclosure, since the amount of interference between the bearing and the support portion into which the bearing is inserted is appropriately set, the bearing is restrained from being excessively pressed to the support portion to excessively increase a bearing load, thus preventing a degradation of compressor efficiency.

Further scope of applicability of the present application will become more apparent from the detailed description given hereinafter. However, it should be understood that the detailed description and specific examples, while indicating preferred embodiments of the invention, are given by way of illustration only, since various changes and modifications within the scope of the invention will become apparent to those skilled in the art from the detailed description.

### BRIEF DESCRIPTION OF THE DRAWINGS

The accompanying drawings, which are included to provide a further understanding of the invention and are incorporated in and constitute a part of this specification, illustrate exemplary embodiments and together with the description serve to explain the principles of the invention.

In the drawings:
FIG. 1 is a cross-sectional view of an electric compressor according to the present disclosure;
FIG. 2 is a cross-sectional view illustrating a compression unit in the electric compressor according to FIG. 1;
FIG. 3 is a cross-sectional view taken along line "VI-VI in FIG. 2;
FIG. 4 is a cross-sectional view illustrating a main frame and a main bearing which are separated from each other according to the embodiment of the present disclosure;
FIG. 5 is a cross-sectional view of a main frame and a main bearing which are combined with each other according to an embodiment of the present disclosure;
FIG. 6 is a graph illustrating the amount of interference between a main bearing and a bearing support portion in an electric compressor according to the present embodiment; and
FIG. 7 is a cross-sectional view illustrating another embodiment of a bearing support portion of a main frame in an electric compressor according to the present disclosure.

### DETAILED DESCRIPTION OF THE INVENTION

Description will now be given in detail of the exemplary embodiments, with reference to the accompanying drawings. For the sake of brief description with reference to the drawings, the same or equivalent components will be provided with the same reference numbers, and description thereof will not be repeated.

Hereinafter, an electric compressor according to the present disclosure will be described in detail with reference to an embodiment shown in the accompanying drawings.

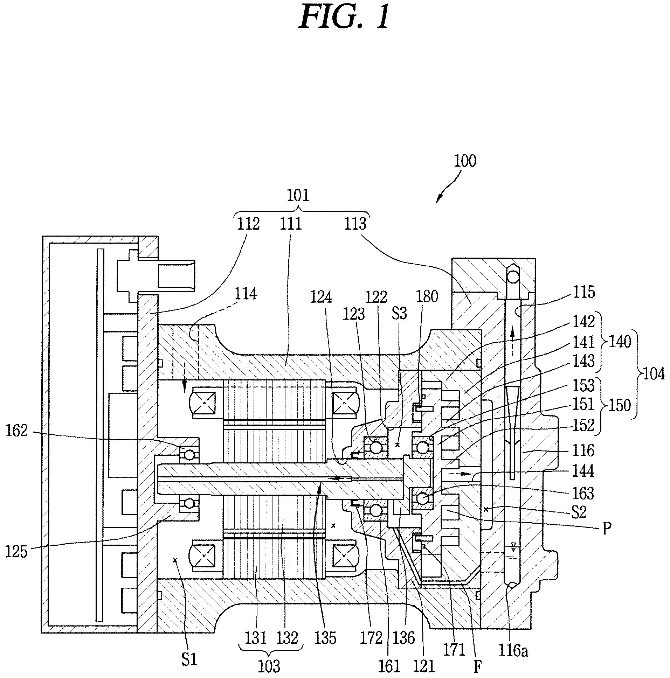

The electric compressor according to the present disclosure may be a scroll compressor in which two scrolls are engaged to compress a refrigerant. The electric compressor according to the present disclosure may be a component of a refrigerating cycle apparatus that sucks and compresses a refrigerant as a working fluid. In this embodiment, a high-temperature, high-pressure electric scroll compressor which uses carbon dioxide (CO₂) as a working fluid and has a discharge pressure of 100 bar, more precisely, about 130 bar and a discharge temperature of about 170°C will be described as an example. FIG. 1 is a cross-sectional view illustrating an electric compressor according to the present disclosure.

Referring to FIG. 1, the electric compressor 100 according to an embodiment of the present disclosure includes a casing 101, a frame 102, a driving unit 103, and a compression unit 104. The frame 102 may include a main frame 121 and a sub-frame 125. Referring to an overall positional relationship, for example, the main frame 121 is fixed to the middle of an inner wall of the casing 101 and the driving unit 103 for generating a driving force is installed on one side (front side) of the main frame 121. The compression unit 104 for receiving a driving force of the driving unit 103 and compressing the refrigerant may be provided on the other side (rear side) of the main frame 121.

In addition, a control unit for controlling an operation of the compressor may be provided outside the casing 101. The control unit may be located on the opposite side of the compression unit 104 with respect to the driving unit 103.

As illustrated in FIG. 1, the casing 101 may include a shell 111, a front cover 112, and a rear cover 113. The shell 111 is formed in a cylindrical shape with both end portions (front and rear) opened, and a suction space S1 may be formed therein. Inside the shell 111, the driving unit 103, the frame, and the compression unit 104 may be accommodated.

The front cover 112 may be coupled to close a front end portion of the shell 111, and the control unit, a power supply unit, or the like, may be connected to the outside of the front cover 112. The rear cover 113 may be coupled to seal a rear end portion of the shell 111. As will be described later, the rear cover 113 may form a part of the discharge space S2 and may include an oil separation portion 116.

The front cover 112 may be provided with an intake port 114 to which a suction pipe is connected to allow the refrigerant to flow into the suction space S1. The intake port 114 may be formed so as to be positioned at the front end portion of the driving unit 103 which is opposite to the compression unit 104 with respect to the driving unit 103. Accordingly, the refrigerant may flow into the inside of the casing 101 through the intake port 114 and may be sucked into the compression unit 104 after passing through the driving unit 103 from the front side to the rear side.

In addition, the rear cover 113 may include an exhaust port 115 to which the discharge pipe is connected to guide the refrigerant compressed by the compression unit 104 to the refrigerating cycle. A rear space of the compression unit 104 closed by the rear cover 113 may be the discharge space S2 communicating with the exhaust port 115. An oil separator 116 separating oil from a mixture of the discharged refrigerant and oil may be formed at a path from the discharge space S2 to the exhaust port 115. FIG. 1 shows an embodiment in which the oil separator 116 communicating with the discharge space S2 separates the refrigerant and oil from each other by a centrifugal force. The oil separated from the refrigerant may be accumulated in a recovery space 116a formed on the bottom surface of the oil separator 116.

The driving unit 103 includes a stator 131 and a rotor 132, and generates a rotational force for driving the rotary shaft 135. In this embodiment, the stator 131 is fixed to an inner circumferential surface of the shell 111 and may have an annular shape to form a cylindrical space therein. The rotor 132 may be disposed in the inner space of the stator 131 so as to be spaced apart from the stator 131. The rotor 132 may have a substantially cylindrical shape, and a rotary shaft 135 may be coupled to the center thereof. When power is supplied to the driving unit 103, the rotor 132 and the rotary shaft 135 may rotate together by an interaction between the stator 131 and the rotor 132.

The rotary shaft 135 may be received in the shell 111 and may be rotatably supported on the frame 120. The rear side of the rotary shaft 135 may be supported in a radial direction by the main bearing 161 mounted on the main frame 121. The inner ring of the main bearing 161 is formed of a deep recess ball bearing which is coupled to the rotary shaft and the outer ring of the inner ring is coupled to the main frame 121. The main bearing 161 is configured as a deep recess ball bearing in which an inner face is coupled to the rotary shaft and an outer face is coupled to the main frame 121, and is press-fit to the bearing support portion 123 of the main frame 121. A mounting structure of the main bearing will be described in detail later.

The front end portion of the rotary shaft 135 may be supported in a radial direction by a sub-bearing 162 mounted on the sub-frame 125 formed on the inner surface of the front cover 112. A portion of the outer circumferential surface of the rotary shaft 135 may be coupled to the rotor 132 to receive a rotational force generated by the driving unit 103.

The compression unit 104 may include a first scroll 140 that is a fixed scroll and a second scroll 150 that is an orbiting scroll. The second scroll 150 is eccentrically coupled to the rotary shaft 135 coupled to the rotor 132 of the driving unit 103 and rotates relative to the first scroll 140 to form a pair of compression chambers P each including a suction chamber, an intermediate pressure chamber, and a discharge chamber.

The first scroll 140 is provided with a fixed side disk plate portion 141 in a circular plate shape, and a fixed side side wall portion 142 protruding toward the main frame 121 may be formed on one side of the fixed side end plate portion 141.

A fixed wrap 143 to be engaged with the orbiting wrap 152 (to be described later) and forming a pair of two compression chambers P protrudes from the center of the fixed side disk plate portion 141. A suction opening (not shown) communicating with the suction space S1 of the casing 101 may be formed at the center of the fixed side disk plate portion 141. A discharge port 144 connected from a final compression chamber to the discharge space S2 of the casing 101 may be formed at the center of the fixed side disk plate portion 141.

In the second scroll 150, an orbiting side disk plate portion 151 having a disk shape is formed, an orbiting wrap 152 protruding toward the fixed side disk plate portion 141 and engaged with the fixed wrap 143 is formed on one side of the orbiting side disk plate portion 151. A boss recess 153 is formed in the other side surface of the orbiting side disk plate portion 151 so that an eccentric bearing 163 for supporting the rotary shaft 135 is inserted and fixed.

The main frame 121 is formed in a substantially disc shape and may be coupled to the fixed side side wall portion 142 of the first scroll 140 and the inner surface of the casing 101 so as to be supported.

A back pressure space 122 is formed at the center of the main frame 121 to form a back pressure space S3 for supporting the second scroll 150 toward the first scroll 140, and a balance weight 136, which is coupled to the rotary shaft 135 and compensates for imbalance according to an eccentric movement of the second scroll 150, may be rotatably received in the back pressure space portion 122.

Since a gap between the back pressure space portion 122 of the main frame 121 and the second scroll 150 in contact therewith and a gap between the main frame 121 and the rotary shaft 135 are sealed, the back pressure space portion 122 is sealed to form the back pressure space S3 described above. For example, a first sealing member 171 is provided on a lower surface of the second scroll 150 in contact with the main frame 121 to seal a thrust bearing surface between the main frame 121 and the second scroll 150, and a second sealing member 172 is provided between an inner circumferential surface of a shaft hole 124 of the main frame 121 and an outer circumferential surface of the rotary shaft 135 to seal a radial bearing surface between the main frame 121 and the rotary shaft 135.

The first sealing member 171 and the second sealing member 172 may be formed in a ring shape having a rectangular cross-section or a V or U cross-section and may be formed of a material such as rubber, Teflon, or engineer plastic. The first sealing member 171 and the second sealing member 172 may be formed of a material having a lower friction coefficient than the main frame 121 or the second scroll 150 in consideration of friction loss.

Meanwhile, a back pressure passage F connecting the discharge space S2 and the back pressure space S3 may be formed in the fixed side disk plate portion 151 of the first scroll 150 and the main frame 121. This causes the oil separated in the discharge space S2 to move to the back pressure space S3 through the back pressure passage F to form the back pressure in the back pressure space S3.

The electric compressor according to the present disclosure operates as follows.

First, when power is applied to the driving unit 103, the rotary shaft 135 rotates together with the rotor 132 of the driving unit 103 to transmit rotational force to the second scroll 150. The second scroll 150 eccentrically connected to the rotary shaft 135 is pivoted by an eccentric distance by an anti-rotation member 180 so that the compression chamber P is continuously moved toward the radial center side of the rotary shaft 135 and the volume is reduced.

Accordingly, the refrigerant flows into the suction space S1 through the intake port 114 and is sucked into the compression chamber P. At this time, the refrigerant may cool the stator 131 and the rotor 132 while passing through the stator 131.

Thereafter, the refrigerant sucked into the compression chamber P is compressed while being moved toward the center side along the movement path of the compression chamber P, and the refrigerant is discharged to the discharge space S2 formed between the first scroll 140 and the rear cover 113.

Oil of the refrigerant discharged to the discharge space S2 is separated in the discharge space S2 or the oil component is separated as the refrigerant passes through the oil separator 116, and the refrigerant is discharged to the refrigerating cycle through the exhaust port 115. Meanwhile, the separated oil may remain in the recovery space 116a of the oil separator 116 and be recovered.

Meanwhile, in the electric compressor as described above, a discharge pressure and discharge temperature differ depending on the type of refrigerant as described above. For example, in the case of R134a refrigerant, a discharge pressure is approximately 30 bar and a discharge temperature is approximately 120°C. However, in the case of CO₂ refrigerant, a discharge pressure is about 100 bar or greater, specifically, 130 bar or greater, and a discharge temperature is about 150°C, specifically, about 170°C. Therefore, compared with the conventional R134a refrigerant, when the CO₂ refrigerant is used, the compressor operates under much higher pressure and high temperature conditions.

In this case, if a coefficient of thermal expansion of the support member for inserting and fixing the bearing is higher than the coefficient of thermal expansion of the bearing, the support member is thermally expanded more than the bearing during operation and the bearing may not be firmly fixed. As a result, the bearing is detached from the support member to weaken durability of the bearing, shortening the service life and reducing reliability of the compressor. In particular, in the case of a low-pressure type in which the inside of the casing is filled with a suction pressure, the rotary shaft moves in the axial direction and the behavior of the second scroll coupled to the rotary shaft may become unstable. Then, the compression chamber may not be tightly sealed, so that the refrigerant may leak from the compression chamber, and the rotary shaft may move in the axial direction and the circumferential direction to increase compressor noise and friction loss.

However, if the bearing support member is made of a material having a low coefficient of thermal expansion such as iron or steel, the weight of the bearing support member is increased. Then, when it is applied to a vehicle, the weight of the vehicle increases, which may be disadvantageous. In the field of electric compressors, which are automotive compressors, parts made of a lightweight aluminum material are used even though the coefficient of thermal expansion is somewhat high. This is the same with the bearing support members.

Accordingly, in the present disclosure, in an electric compressor using a lightweight component, such as aluminum, even though the coefficient of thermal expansion thereof is high, the bearing supporting the rotary shaft may be easily and firmly coupled to the bearing support member. In particular, the main frame disposed adjacent to the back pressure space among the frames supporting the bearing is in a condition of a relatively high temperature and a high pressure, and thus, the main frame is highly likely to be thermally expanded during an operation of the compressor.

If the inner diameter of the bearing support increases due to thermal expansion of the main frame, the main bearing coupled to the main frame is easily separated from the bearing support. As a result, the life of the bearing as well as the efficiency and reliability of the compressor may be significantly reduced. This is the same with an eccentric bearing fixed to the second scroll formed of an aluminum material. Hereinafter, a structure for easily and firmly fixing the main bearing to the main frame will be described. However, the same may be applied to the second scroll and the eccentric bearing.

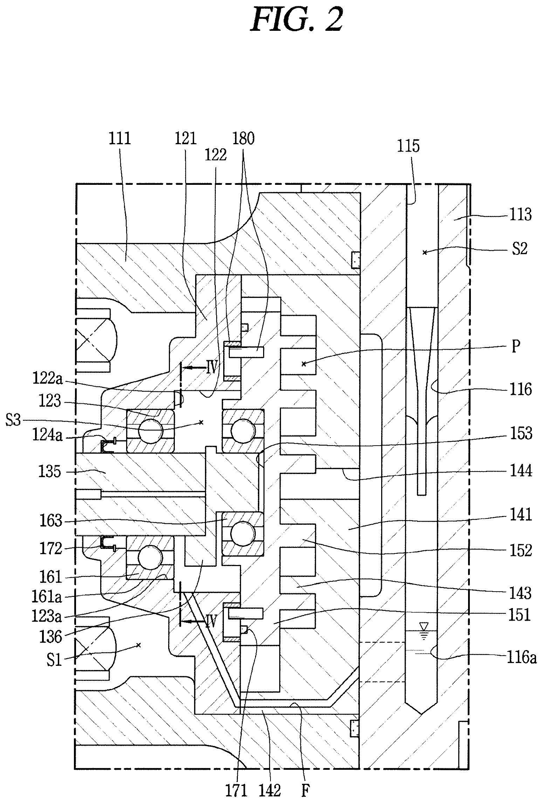

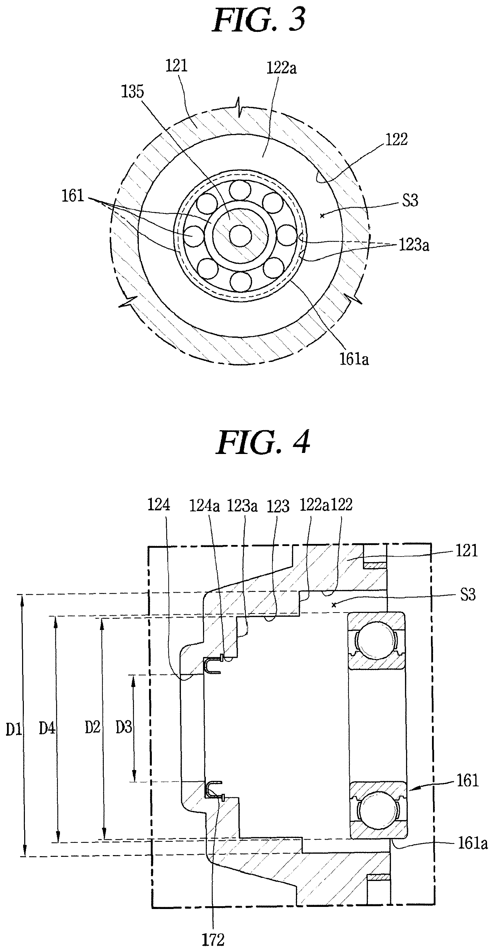

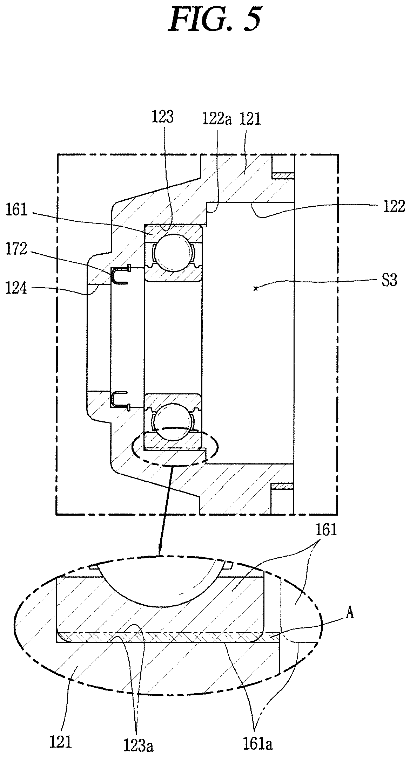

FIG. 2 is a cross-sectional view illustrating a compression unit in the electric compressor according to FIG. 1, FIG. 3 is a cross-sectional view taken along line "VI-VI in FIG. 2, FIG. 4 is a cross-sectional view illustrating a main frame and a main bearing which are separated from each other according to the embodiment of the present disclosure, and FIG. 5 is a cross-sectional view of a main frame and a main bearing which are combined with each other according to an embodiment of the present disclosure;

As illustrated, in the electric compressor according to the present embodiment, the main frame 121 is formed with the back pressure space portion 122 described above at the center of a thrust surface where the second scroll 150 is opposed, a bearing support portion 123 to which the main bearing 161 is inserted and fixed is formed at the center of the bottom of the back pressure space portion 122, and a shaft hole 124 to which the rotary shaft 135 penetrates to be coupled may be formed at the center of the bottom of the bearing support portion 123. A sealing recess 124a into which a second sealing member 172 is inserted and supported may be formed to be stepped on the bearing support portion 123 in an inner circumferential surface of the shaft hole 124. Thus, the main frame 121 may be formed to be stepped through at least three stages opposite to the thrust surfaces.

The bearing support portion 123 is formed to be stepped to have an inner diameter D2 smaller than an inner diameter D1 of the back pressure space portion 122 at the bottom surface (front surface in the drawing) 122a of the back pressure space portion 122 forming the back pressure space S3, and a shaft hole 124 having an inner diameter D3 smaller than the inner diameter D2 of the bearing support portion 123 may be formed to be stepped on a bottom surface (front surface in the drawing) 124a of the bearing support portion 123. Accordingly, the bearing support portion 123 is opened at a first end portion toward the second scroll 150, and the main bearing 161 may be press-fit into the bearing support portion 123 through the first end portion.

As described above, a sealing recess 124a may be formed on one side of the bearing support portion 123, and a second sealing member 172 may be inserted into the sealing recess 124a. The sealing recess 124a may communicate with the back pressure space portion 122 constituting the back pressure space S3 through the main bearing 161 formed of a deep groove ball bearing. Accordingly, the back pressure space S3 may be sealed at one end by the second sealing member 172.

The second sealing member 172 may be formed in a rectangular cross-sectional shape or may be formed in a V-shaped cross-section or a U-shaped cross-sectional shape as described above and may be formed of a material having a coefficient of thermal expansion larger than that of the main frame, such as rubber or Teflon. Thus, when the main bearing 161 is press-fit to the main frame 121, a warm shrink fitting method of heating the main frame 121 and subsequently inserting the main bearing 161 may not be applied. That is, since the sealing recess 124a into which the second sealing member 172 is inserted is opened toward the bearing support portion 123 into which the main bearing 161 is inserted, the main bearing 161 must be inserted into the main frame 121 in a state in which the second sealing member 172 is first coupled. However, as described above, since the second sealing member 172 is formed of a material having a coefficient of thermal expansion larger than that of the main frame 121, if the second sealing member 172 is heated in a state where the second sealing member 172 is inserted into the main frame 121, the second sealing member 172 may be excessively thermally deformed or damaged. Thus, the main bearing 161 is press-fit into the bearing support portion 123 in a state where the second sealing member 172 is inserted into the main frame 121.

When the compressor is operated in a state where the main bearing 161 is press-fit into the bearing support portion 123, the compressor discharges a high temperature, high pressure refrigerant compressed to 150 to 170°C and 100 to 130 bar with respect to a discharge pressure to the discharge space S2. The high-temperature and high-pressure refrigerant is separated into oil and refrigerant in the discharge space S2, and the oil is reduced to a certain degree through the back-pressure passage F to move to the back-pressure space S3. Therefore, although the temperature and pressure in the back pressure space S3 are lower than the temperature and pressure of the refrigerant in the discharge space, the temperature and pressure may be considerably higher than those of a case of applying the R134a refrigerant. When the main frame 121 is brought into contact with the high-temperature and high-pressure oil, the bearing support portion 123 of the main frame 121 made of aluminum is thermally expanded more than the main bearing 161 made of a steel material. Then, the inner circumferential surface 123a of the bearing support portion 123 and the outer circumferential surface 161a of the main bearing 161 are separated and the main bearing 161 is released from the bearing support portion 123, and thus, the amount of shaking of the main bearing 161 may be significantly increased.

Considering this, in this embodiment, as illustrated in FIGS. 4 and 5, the inner diameter D2 of the bearing support portion 123 may be formed to be smaller than the outer diameter D4 of the main bearing 161 (more precisely, the outer diameter of the outer race). Then, when the main bearing 161 is press-fit into the bearing support portion 123, an inner part of the bearing support portion 123 is pressed and compressed by the main bearing 161 and the outer circumferential surface 161a of the main bearing 161 may be tightly brought into close contact with the inner circumferential surface 123a of the bearing support portion 123. Thus, even though the main frame 121 thermally expands more than the main bearing 161 by the oil of high temperature and high pressure, the main bearing 161 may be prevented from being easily released. In the figure, the shaded area A is the pressed part of the bearing support portion.

However, when the inner diameter D2 of the bearing support portion 123 is too small as compared with the outer diameter D4 of the main bearing 161, the outer circumferential surface 161a of the main bearing 161 and the inner circumferential surface of the bearing support portion 123 are excessively adhered to each other to increase a bearing load excessively, and resultantly, friction loss in the main bearing 161 at the time of rotation of the rotary shaft 135 may increase.

Thus, it is important to set the inner diameter of the bearing support portion 123 such that the main bearing 161 is not released to be shaken due to thermal expansion of the bearing support portion 123, while the outer circumferential surface 161a of the main bearing 161 and the inner circumferential surface 123a of the bearing support portion 123 are not excessively brought into close contact with each other.

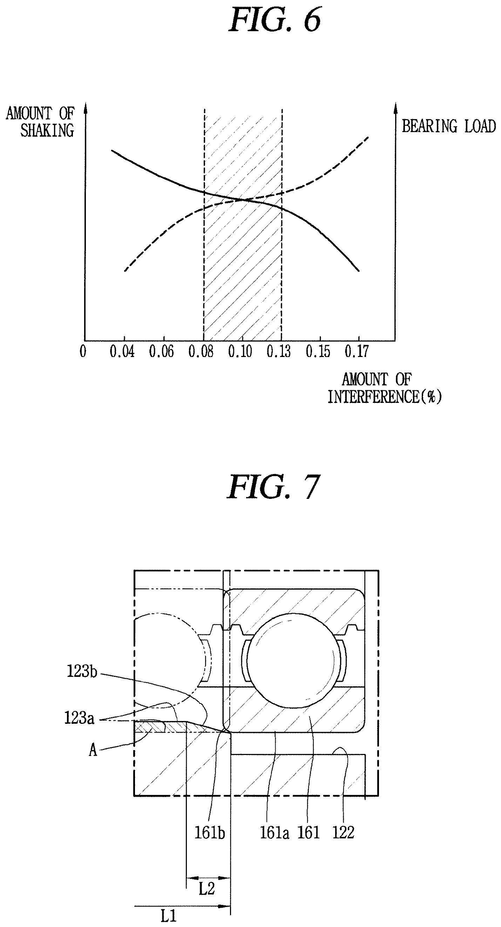

FIG. 6 is a graph illustrating the amount of interference between the main bearing and the bearing support portion the electric compressor according to the present embodiment. This is a graph based on the data obtained by experiencing many trials and errors of the researchers belonging to the present applicant.

As shown in the figure, an X axis is set to designate the amount of interference (%), a first Y axis is set to designate the amount of shaking of the rotary shaft, and a second Y axis is set to designate a bearing load, and results of comparing an optimal relationship between the shaking amount of the rotary shaft over the amount of interference and a bearing load are as follows.

That is, as the amount of interference decreases, the amount of shaking of the rotary shaft increases while the bearing load decreases. Conversely, as the amount of interference increases, the amount of shaking of the rotary shaft decreases while the bearing load increases.

However, such a phenomenon shows that the amount of shaking of the rotary shaft and a fluctuation range of the bearing load are significantly improved in the range of 0.08 to 0.13% of the amount of interference compared with the other ranges. Accordingly, when the amount of interference is set to be in the range of 0.08 to 0.13%, the rotary shaft may be stably supported and the load of the bearing may be appropriately maintained, thereby improving the reliability and efficiency of the compressor.

An example of an actual experiment is as follows. A main frame used in the experiment is aluminum, and the main bearing is made of steel. Therefore, the coefficient of thermal expansion of the main frame is 0.000023 and that of the main bearing is 0.000012, so that the coefficient of thermal expansion of the main frame is about twice that of the main bearing.

Also, the experiment was conducted in an environment in which an assembly temperature was 25°C, which is room temperature, and a driving temperature was about 100°C. Here, in the case of the CO₂ refrigerant, the discharge temperature is 150°C or higher, but the temperature is lowered as the discharged refrigerant moves to the back pressure space, so the temperature of the actual back pressure space is set at 100°C lower than the discharge temperature. However, considering the discharge temperature of CO₂ refrigerant, the amount of interference was conservatively defined.

Also, a machining error was set to be managed to 10 µm or less.

Based on the above conditions, the inner diameter of the main frame and the outer diameter of the main bearing at the assembly temperature of 25°C are as follows.

**[Table 1]**

| Inner diameter of main frame (mm) | | | |
|---|---|---|---|
| Minimum | Average | Maximum | |
| 46.935 | 46.945 | 46.955 | |

| Outer diameter of main bearing (mm) | | | |
|---|---|---|---|
| Minimum | | Average | Maximum |
| 46.989 | | 46.955 | 47 |

Thus, the amount of interference is as follows.

**[Table 2]**

| Amount of interference | | |
|---|---|---|
| Minimum | Average | Maximum |
| 0.034 | 0.0495 | 0.065 |

That is, the amount of interference is 0.034 to 0.065 mm before the main bearing is assembled to the main frame.

The inner diameter of the main frame and the outer diameter of the main bearing at a driving temperature of 100°C are as follows.

**[Table 3]**

| Inner diameter of main frame (mm) | | |
|---|---|---|
| Minimum | Average | Maximum |
| 47.008 | 47.018 | 47.028 |

| Outer diameter of main bearing (mm) | | |
|---|---|---|
| Minimum | Average | Maximum |
| 47.034 | 47.040 | 47.045 |

Thus, the amount of interference is calculated as follows.

**[Table 4]**

| Amount of interference | | |
|---|---|---|
| Minimum | Average | Maximum |
| 0.006 | 0.022 | 0.037 |

That is, even when the compressor is driven, the bearing support portion 123 of the main frame 121 and the main bearing 161 secure an appropriate amount of interference, so that the main bearing 161 may be prevented from being separated from the bearing support portion 123. In this case, as for the ratio of the inner diameter D2 of the bearing support portion 123 to the outer diameter D4 of the main bearing D4, the inner diameter D2 of the main frame may be smaller by 0.07 to 0.14% than the outer diameter D4 of the main bearing. However, the ratio may be conservatively defined to about 0.08 to 0.13% in consideration of the fact that the oil moving to the back pressure space S3 is decompressed as described above.

Meanwhile, when the amount of interference is applied, the load applied to the main bearing is as follows.

**[Table 5]**

| | | |
|---|---|---|
| Amount of interference | 0.034 | 0.065 |
| Bearing tangential stress (Mpa) | 80.83 | 154.24 |
| Frame tangential stress (Mpa) | 66.54 | 127.26 |
| Bearing&frame circumferential stress (Mpa) | 14.9 | 28.45 |

This is because, when the inner diameter D2 of the bearing support portion and the outer diameter D4 of the main bearing are designed to satisfy the above amount of interference, the stress is less than plastic deformation in the tangential and circumferential directions, and thus, the bearing load is not excessively increased to degrade compressor efficiency.

Therefore, when the amount of interference before assembling the main bearing 161 to the main frame 121 is limited to 0.08 to 0.13% as described above, even when the compressor is driven, the main bearing 161 is not released from the bearing support portion 123 of the main frame 121, ensuring reliability, and since the load of the main bearing 161 is not excessively increased to degrade compressor efficiency, the compressor efficiency may be increased.

Meanwhile, another embodiment of the electric compressor according to the present disclosure is as follows.

That is, in the above-described embodiment, the inner circumferential surface of the bearing support portion of the main frame is formed to have the same inner diameter, but in this embodiment, the corner of the inner circumferential surface of the bearing support portion is inclined to easily press-fit the main bearing.

FIG. 7 is a cross-sectional view illustrating another embodiment of a bearing support portion of a main frame in an electric compressor according to the present disclosure.

As shown in the figure, an angled or curved guide surface 123b may be formed at an edge of the first end portion opened in the inner circumferential surface of the bearing support portion 123 so as to be enlarged toward the first end direction.

The axial length L2 of the guide surface 123b is smaller than 1/2 of the entire axial length L1 of the bearing support portion 123 and, in a maximum width of the guide surface 123b, the outer diameter D5 of the guide surface may be smaller than or equal to the outer diameter D4 of the main bearing. Accordingly, although the guide surface 123b is formed, the main bearing 161 and the bearing support portion 123 may be kept in close contact with each other, so that the fixing force to the main bearing may be secured.

The outer edge of the outer race forming the main bearing 161 is chamfered so that the outer ring edge 161b of the main bearing 161 slides on the guide surface 123b of the bearing support portion 123 so as to be smoothly press-fit when the main bearing 161 is press-fit.

The structure for press-fitting the main bearing 161 into the bearing support portion 123 of the electric compressor according to the present embodiment is the same as that of the above-described embodiment. In this embodiment, since the guide surface 123b is formed at the corner of the bearing support portion 123, bearing power between the bearing support portion 123 and the main bearing 161 may be slightly reduced in the portion where the guide surface 123b is formed, as compared with the aforementioned embodiment. However, in a portion where the guide surface is not formed, the amount of interference is secured as 0.08 ∼ 0.13% as in the above-described embodiment, so that the bearing power supporting the main bearing 161 may be secured sufficiently.

The foregoing embodiments and advantages are merely exemplary and are not to be considered as limiting the present disclosure. The present teachings may be readily applied to other types of apparatuses. This description is intended to be illustrative, and not to limit the scope of the claims. Many alternatives, modifications, and variations will be apparent to those skilled in the art. The features, structures, methods, and other characteristics of the exemplary embodiments described herein may be combined in various ways to obtain additional and/or alternative exemplary embodiments.

As the present features may be embodied in several forms without departing from the characteristics thereof, it should also be understood that the above-described embodiments are not limited by any of the details of the foregoing description, unless otherwise specified, but rather should be considered broadly within its scope as defined in the appended claims, and therefore all changes and modifications that fall within the metes and bounds of the claims, or equivalents of such metes and bounds are therefore intended to be embraced by the appended claims.

## Claims

1. An electric compressor comprising:
a first scroll (140);
a second scroll (150) engaged with the first scroll (140) and configured to make an orbiting motion to form a pair of two compression chambers (P) with the first scroll (140);
a rotary shaft (135) eccentrically coupled to the second scroll (150);
a bearing member (161; 163) configured to allow the rotary shaft (135) to be inserted and rotatably supported therein; and
a frame (102, 121, 125) fixed to the opposite side of the first scroll (140) in a radial direction with the second scroll (150) interposed therebetween and having a bearing support portion (123) to which the bearing member (161) is inserted and fixed,
wherein with respect to a state in which the bearing member (161) is not inserted into the frame (102, 121, 125) yet, an inner diameter (D2) of the bearing support portion (123) is formed to be smaller than an outer diameter (D4) of the bearing member (161).

2. The electric compressor of claim 1, wherein
an inner diameter (D2) of the bearing support portion (123) is formed to be smaller by 0.08 to 0.13% than the outer diameter (D4) of the bearing member (161).

3. The electric compressor of claim 1 or 2, wherein
the frame (102, 121, 125) is formed of a material having a thermal strain temperature lower than that of the bearing member (161) or the rotary shaft (135).

4. The electric compressor of any one of claims 1 to 3, wherein
the bearing support portion (123) has a guide surface (123b) configured such that an inner diameter thereof is increased in a direction in which the bearing member (161) is inserted.

5. The electric compressor of claim 4, wherein
an axial length (L2) of the guide surface (123b) is 1/2 or less compared to an axial length (L1) of the bearing support portion (123).

6. The electric compressor of any one of claims 1 to 5, wherein
a pressure of a refrigerant discharged from the compression chamber (P) is 100 bar or greater.

7. The electric compressor of any one of claims 1 to 6, wherein
the frame (102, 121, 125) is formed of aluminum material.

8. The electric compressor of any one of claims 1 to 7, wherein
an outer diameter (D4) of the bearing member (161) is formed to be greater than an inner diameter (D2) of the bearing support portion (123), and the amount of interference between the bearing member (161) and the bearing support portion (123) defined by a difference between the outer diameter (D4) of the bearing member (161) and the inner diameter (D2) of the bearing support portion (123) is 0.08 to 0.13% with respect to the inner diameter (D2) of the bearing support portion (123).

9. The electric compressor of any one of claims 1 to 8, wherein
a shaft hole (124) through which the rotary shaft (135) penetrates is formed at the frame (121), the shaft hole (124) is formed on one side of the bearing support portion (123), and a sealing member (172) configured to seal a gap between an inner circumferential surface of the shaft hole (124) and an outer circumferential surface of the rotary shaft (135) is provided in the shaft hole (124).

10. The electric compressor of claim 9, wherein
the sealing member (172) is formed of a material having a coefficient of thermal expansion larger than that of the frame (121).

11. The electric compressor of any one of claims 1 to 10, wherein
the frame (102, 121, 125) is formed of aluminum and the bearing member (161) is formed of steel.

12. The electric compressor of any one of claims 1 to 11, wherein
in a state in which the bearing member (161) is press-fit to the bearing support portion (123), an inner diameter at a corner of the bearing support portion (123) is formed to be the same along a circumferential direction.

13. The electric compressor of any one of claims 1 to 11, wherein
in a state in which the bearing member (161) is press-fit to the bearing support portion (123), an inner diameter at the corner of the bearing support portion (123) is formed to be the same as an outer diameter (D4) of the bearing member (161) along the circumferential direction.

14. The electric compressor of any one of the preceding claims, wherein
a pressure of a refrigerant discharged from the compression chamber (P) is 100 bar or greater.
